(19) Europäisches Patentamt
European Patent Office
Office européen des brevets

(11) **EP 2 155 815 B1**

(12) **EUROPEAN PATENT SPECIFICATION**

(45) Date of publication and mention
of the grant of the patent:
**03.09.2014 Bulletin 2014/36**

(51) Int Cl.:
***A01N 59/16*** *(2006.01)*   ***C08K 5/06*** *(2006.01)*
***C08K 5/00*** *(2006.01)*   ***C08K 3/00*** *(2006.01)*

(21) Application number: **08760282.7**

(22) Date of filing: **30.05.2008**

(86) International application number:
**PCT/EP2008/056694**

(87) International publication number:
**WO 2008/151948 (18.12.2008 Gazette 2008/51)**

(54) **ANTIMICROBIAL POLYOLEFIN AND POLYESTER COMPOSITIONS**

ANTIMIKROBIELLE POLYOLEFIN- UND POLYESTERZUSAMMENSETZUNGEN

COMPOSITIONS ANTIMICROBIENNES DE POLYOLÉFINE ET DE POLYESTER

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **11.06.2007 US 934140 P**

(43) Date of publication of application:
**24.02.2010 Bulletin 2010/08**

(73) Proprietor: **BASF SE**
**67056 Ludwigshafen (DE)**

(72) Inventors:
• **LEUKEL, Joerg**
**79110 Freiburg (DE)**
• **RIEFFEL, Thi Thoa**
**F-68640 Muespach (FR)**
• **DEISENROTH, Ted**
**Brookfield, CT 06804 (US)**
• **LIN, I-Chyang**
**Spring Valley, NY 10977 (US)**
• **FAY, Joseph James**
**Hopewell Junction, NY 12533 (US)**

(56) References cited:
**US-A- 6 071 542      US-A1- 2006 068 662
US-B2- 6 585 989**

## Description

The present invention is aimed at antimicrobial polyolefin and polyester compositions, for example polyolefin and polyester films, fibers or molded parts. The polyolefins and polyesters are provided outstanding permanent antimicrobial activity via the incorporation therein of a combination of a silver antimicrobial additive and a certain wettability additive.

## Background

Zeolite supported silver is disclosed in U.S. Pat. Nos. 4,775,585; 4,911,898; 4,911,899 and 6,071,542.

Zeolite supported silver is also taught in U.S. Pat. No. 6,585,989.

Glass supported silver is disclosed for example in U.S. app. No. 2005/0233888.

U.S. Pat. No. 6,984,392 teaches nano scaled antimicrobial silver.

WO2006/051048 teaches antimicrobial polymer compositions.

U.S. Pat. No. 6,784,235 and U.S. published app. No. 2002/0169429 teach certain alkoxylated alcohols as wettability additives for polyolefins.

U.S. published app. No. 2006/0020066 is aimed at wettable polyester compositions that comprise alkyl metal sulfonates.

It has been found that polyolefin and polyester compositions that comprise silver antimicrobials and certain wettability additives are provided outstanding permanent antimicrobial activity.

## Summary

Disclosed are polyolefin or polyester compositions with durable antimicrobial activity comprising

a polyolefin or polyester substrate and

incorporated therein

a silver antimicrobial and a wettability additive selected from the group consisting of ethoxylated alcohols and alkyl metal sulfonates.

Also disclosed is a process for providing durable antimicrobial activity towards polyolefin or polyester compositions, which process comprises

incorporating into a polyolefin or polyester substrate

a silver antimicrobial and a wettability additive selected from the group consisting of ethoxylated alcohols and alkyl metal sulfonates.

## Detailed Disclosure

The silver antimicrobial may be any known antimicrobial form of silver. It may for example be silver supported on a zeolite, silver supported on a glass, elemental silver, micro or nano scaled elemental silver, elemental silver dispersed in silicone oil (polymethyldisiloxane), silver chloride, silver nitrate, silver sulfate, silver phosphate, silver zirconate, or silver apatite.

Silver supported on a zeolite is for example taught in U.S. Pat. Nos. 4,775,585; 4,911,898; 4,911,899; 6,071,542 or 6,585,989,

A zeolite is generally aluminosilicate having a three dimensional grown skeleton structure and is generally represented by $xM_{2/n} \cdot OAl_2O_3 \cdot ySiO_2 \cdot H_2O$, written with $Al_2O_3$ as a basis, wherein M represents an ion-exchangeable metal ion, which is usually the ion of a monovalent or divalent metal; n corresponds to the valence of the metal; x is a coefficient of the metal oxide; y is a coefficient of silica; and z is the number of water of crystallization. The zeolites of the present invention have a specific surface area of at least $150m^2/g$. The present zeolites support antimicrobial silver, that is silver is retained at the ion-exchangeable sites of the zeolite.

The silver supported on a zeolite may be a surface-modified silver supported zeolite according to U.S. Pat. No. 6,071,542.

The silver supported on glass may also include zinc, that is it may be silver glass or silver zinc glass. Glass supported silver is taught for example in U.S. Pat. Nos. 5,049,139 and 6,143,318 and published U.S. application No. 2005/0233888.

The elemental silver may be for example micro scaled or nano scaled. Nano scaled antibacterial silver is disclosed in U.S. Pat. No. 6,822,034, the relevant disclosure of which is hereby incorporated by reference. Nano scaled silver is also taught in U.S. Pat. No. 6,984,392.

The amount of silver employed is for example from about 0.001 to about 15 weight percent silver, based on the weight of the polyolefin or polyester. For instance, the amount of silver employed is from about 0.005 to about 5.0 weight percent silver or from about 0.005 to about 1.0 weight percent silver, based on the weight of the polyolefin or polyester. For instance the amount of silver employed is about 0.01, about 0.05 or about 0.1 percent by weight silver based on the weight of the polyolefin or polyester.

For instance, the amount of elemental silver employed is from about 0.01 to about 5.0 weight percent, based on the weight of the. For instance, the amount of elemental silver employed is from about 0.01 to about 2.0 weight percent or from about 0.01 to about 1.0 weight percent, based on the weight of the polymer.

For instance, the amount of supported silver employed is for example from about 0.001 to about 0.2 weight percent, based on the weight of the polymer. For instance, the amount of supported silver employed is from about 0.01 to about 0.2 weight percent or from about 0.05 to about 0.2 weight percent, based on the weight of the polymer. These weight levels are based on the silver.

The silver employed may be some mixture of the forms of antimicrobial silver discussed above.

Further antimicrobials may also be employed in the present compositions, for instance 3,5-dimethyl-tetrahydro-1,3,5-2H-thiodiazin-2-thione, bis-tributyltinoxide, 4.5-dichlor-2-n-octyl-4-isothiazolin-3-one, N-butyl-benzisothiazoline, 10.10'-oxybisphenoxyarsine, zinc-2-pyridinthiol-1-oxide, 2-methylthio-4-cydopropylamino-6-($\alpha,\beta$-dimethylpropylamino)-s-triazine, 2-methylthio-4-cyclopropylamino-6-tert-butylamino-s-triazine, 2-methylthio-4-ethylamino-6-($\alpha,\beta$-dimethylpropylamino)-s-triazine, 2,4,4'-trichloro-2'-hydroxydiphenyl ether, IPBC, carbendazim or thiabendazole.

It is a further subject of this invention that the silver antimicrobial may be replaced with other known antimicrobials such as 2-phenyl phenol, 2.4.4'-trichlor-2'-hydroxydiphenylether, 4,4'-dichlor-2-hydroxydiphenylether, 2,2'-methylenbis-(4-chloro-phenol), 4-(2-t-butyl-5-methylphenoxy)-phenol, 3-(4-chlorophenyl)-1-(3,4-dichloro-phenyl)-urea or 2,4,6-trichlorophenol.

The alkyl metal sulfonates are of the formula $RSO_3M$,
where M is Na, K or Li and R is straight or branched chain alkyl of 6 to 32 carbon atoms or is straight or branched chain alkenyl of 6 to 32 carbon atoms.

For instance, M is Na, K or Li and R is straight or branched chain alkyl of 12 to 15 carbon atoms or is straight or branched chain alkenyl of 12 to 18 carbon atoms.

Alkyl is a branched or unbranched radical, for example 1-methylpentyl, 1,3-dimethylbutyl, n-hexyl, 1-methylhexyl, n-heptyl, isoheptyl, 1,1,3,3-tetramethylbutyl, 1-methylheptyl, 3-methylheptyl, n-octyl, 2-ethylhexyl, 1,1,3-trimethylhexyl, 1,1,3,3-tetramethylpentyl, nonyl, decyl, undecyl, 1-methylundecyl, dodecyl, 1,1,3,3,5,5-hexamethylhexyl, tridecyl, tetradecyl, pentadecyl, hexadecyl, heptadecyl, octadecyl, icosyl or docosyl.

Alkenyl is an unsaturated version of alkyl, for example hexenyl, heptenyl, and the like.

The ethoxylated alcohols are of the formula

$$CH_3CH_2(CH_2CH_2)_aCH_2CH_2(OCH_2CH_2)_bOH$$

where a is 6 to 25 and b is 1 to 100.

In the compounds of the formula $CH_3CH_2(CH_2CH_2)_aCH_2CH_2(OCH_2CH_2)_bOH$, the term "a" is for example 6, 7, 8, 9, 10, 11, 12, 13, 14, 15, 16, 17, 18, 19, 20, 21, 22, 23, 24 or 25. The term "b" is for example every integer from 1 to 100, for example 1, 2, 3, 4, 5, 6, 7, 8, 9, or 10, etc. The term "b" is for example from 1 to 10.

The present wettability additives are present from about 0.001 % to about 15% by weight, based on the weight of the polyolefin or polyester. For instance, the wettability additives are present from about 0.1 % to about 10% by weight, from about 1% to about 8% by weight, or from about 1% to about 7% by weight, based on the weight of the polyolefin or polyester.

The polyolefins or polyesters may be in any form, for example fibers, filaments, films or molded parts.

A preferred composition is a woven or nonwoven fabric. These may be for example woven or nonwoven polyolefin or polyester fabrics.

The present methods produce for example fibers or filaments which are knitted, woven or bonded into knit, woven or nonwoven fabrics.

The present melt extrusion methods form fibers or filaments. In accordance with known technology such as continuous filament spinning for yarn or staple fiber, and nonwoven processes such as spunbond production and meltblown production, the fibers or filaments are formed by extrusion of the molten polymer through small orifices. In general, the fibers or filaments thus formed are then drawn or elongated to induce molecular orientation and affect crystallinity, resulting in a reduction in diameter and an improvement in physical properties. In nonwoven processes such as spunbonding and meltblowing, the fibers or filaments are directly deposited onto a foraminous surface, such as a moving flat conveyor and are at least partially consolidated by any of a variety of bonding means. It is known to those skilled in the art to combine processes or the fabrics from different processes to produce composite fabrics which possess certain desirable characteristics. Examples of this are combining spunbond and meltblown to produce a laminate fabric. Additionally either or both of these processes may be combined in any arrangement with a staple fiber carding process or bonded fabrics resulting from a nonwoven staple fiber carding process. In such described laminate fabrics, the layers are generally at least partially consolidated.

Nonwoven fabrics may have a carded fiber structure or comprise a mat in which the fibers or filaments are distributed in a random array. The fabric may be formed by any one of numerous known processes including hydroentanglement or spun lace techniques, or by air laying or meltblowing filaments, batt drawing, stitchbonding, etc., depending upon the end use of the article to be made from the fabric.

The invention is also applicable to melt extruded bi-component fibers, wherein one of the components is a polyolefin or a polyester according to this invention.

Spunbond filament sizes most useful for fabrics of the anticipated type are from about 1.0 to about 3.2 denier. Meltblown fibers typically have a fiber diameter of less than 15 microns and most typically for the anticipated applications are fiber diameters less than 5 microns, ranging down to the submicron level. Webs in a composite construction may be processed in a wide variety of basis weights.

Polyolefin fibers are typically extruded at temperatures in the range of from about 210° to about 240°C. Polyolefin fiber spinning may by performed at a temperature of up to about 300°C. Polyester fibers are typically extruded at temperatures in the range of from about 285° to about 300°C.

According to the present invention, antimicrobial silver and a certain ethoxylated alcohol or a certain alkyl metal sulfonate are incorporated into a polyolefin or a polyester in the melt, which is extruded into for example pellets or granules or ultimately fibers, films or molded articles.

The present silver additives and wettability additives may be compounded with the polymer pellets which are to be melt extruded. To improve processing, the additives may be preformulated or compounded into a polymer which may also contain small amounts of inorganic powder such as talc, and/or other traditional stabilizers.

The mixing of the present silver and wettability additives into the polyolefin or polyester polymer is done by mixing them into molten polymer by commonly used techniques such as roll-milling, mixing in a Banbury type mixer, or mixing in an extruder barrel and the like. The heat history (time at which held at elevated temperature) can be shortened by mixing the additives with unheated polymer particles so as to achieve substantially even distribution of the agents in the mass of polymer, thereby reducing the amount of time needed for intensive mixing at molten temperature.

Conveniently, the present additives can also be added substantially simultaneously or sequentially with any other additives which may be desired in certain instances. The present additives may also be pre-blended with other additives and the blend then added to the polymer. It is contemplated that in some instances the present additives may have the additional benefit of aiding other additives to become more easily or evenly dispersed or dissolved in the polymer. For easier batch-to-batch control of quality, it may be preferred to employ concentrated masterbatches of polymer/additive blends which are subsequently blended, as portions, to additional quantities of polymer to achieve the final desired formulations. The masterbatch, or the neat additives, may be injected into freshly prepared polymer while the polymer is still molten and after it leaves the polymerization vessel or train, and blended therewith before the molten polymer is chilled to a solid or taken to further processing.

The present masterbatches contain the silver antimicrobial additive and the wettability additive in concentrations of for example from about 1% to about 75%, from about 2% to about 50% or from about 5% to about 40% by weight, based on the weight of the polyolefin or polyester.

The incorporation of the present antimicrobial silver additives and wettability additives provides for permanent antimicrobial activity. That is, the present polyolefins and polyesters have durable antimicrobial activity, such that the fibers, films or molded parts made therefrom do not lose their antimicrobial activity upon aging or handling. The antimicrobial activity is stable to repeated insults, without a loss of performance, even over extended time periods.

The present invention is aimed for example at nonwoven polyolefin or polyester fabrics. It is also aimed at threads or yarns for weaving or knitting in conventional textile processes.

The additives of the present invention are effective irrespective of other factors that influence the properties of nonwoven fabrics, for example, basis weight, fiber diameter, degree and type of bonding of the fibers, and the synergistic effects and influence of composite structures.

The present invention is not limited to single component fibers. Polyolefin or polyester bi-component fibers, particularly side-by-side or sheath-core fibers of polyolefin or polyester would be expected to demonstrate the same practical benefits as single component fibers of either type. It would be particularly efficacious to include the melt additives only in a single component.

The present methods may be employed for hollow fibers, for example as disclosed in U.S. Pat. Nos. 4,357,390 and 4,666,764. The disclosure of U.S. Pat. No. 4,351,738 is also referred to.

The antimicrobial fabrics produced from the fibers or filaments of this invention are particularly useful, for example, as the skin contacting inner lining fabric of sanitary articles, particularly single use diapers, training pants, feminine hygiene products or incontinence care products. The fabrics also have utility in wet and dry wipes, wound dressings, surgical gowns, surgical masks, filters, and textiles for hospital environments.

A further preferred embodiment is composition according to the invention which is a molded part.

A further preferred embodiment is a composition of the invention in the form of a film. Antimicrobial films are employed for example as food packaging.

The structures of diapers are described for example in U.S. Pat. Nos. 5,961,504, 6,031,147 and 6,110,849.

It is often desirable to impart antimicrobial and wettability to melt extruded polyolefin or polyester films. Such films, in perforated form, are widely used as cover sheets for sanitary articles.

The fabrics of the present invention may be sterilized by exposure to about 0.5 to about 10 megarads of gamma irradiation. Sterilization with gamma irradiation is employed for hospital garments and the like.

The polyester has dicarboxylic acid repeat units selected from the group consisting of aromatic dicarboxylic acids having 8 to 14 carbon atoms, aliphatic dicarboxylic acids having 4 to 12 carbon atoms, cycloaliphatic dicarboxylic acids having 8 to 12 carbon atoms, and mixtures thereof.

For instance such diacids are terephthalic acid, isophthalic acid, o-phthalic acid, naphthalene dicarboxylic acid, cyclohexane dicarboxylic acid, cyclohexanediacetic acid, diphenyl-4,4'-dicarboxylic acid, succinic acid, maleic acid, glutaric acid, adipic acid, sebacic acid and mixtures thereof.

For example diacids are terephthalic acid, isophthalic acid and 2,6-naphthalene dicarboxylic acid.

The diol or glycol portion of the polyester are derived from the generic formula HO-G-OH where G is an aliphatic, cycloaliphatic or aromatic moiety of 2 to 18 carbon atoms.

For example such diols or glycols are ethylene glycol, diethylene glycol, triethylene glycol, propane-1,3-diol, propane-1,2-diol, butane-1,4-diol, pentane-1,5-diol, hexane-1,6-diol, 1,4-cyclohexanedimethanol, 3-methylpentane-2,4-diol, 2-methylpentane1,4-diol, 2,2-diethyl-propane-1,3-diol, 1,4-di-(hydroxyethoxy)benzene, 2,2-bis(4-hydroxycyclohexyl)-propane, 2,4-dihydroxy-1,1,3,3-tetramethylcyclobutane, 2,2-bis-(3-hydroxyethoxyphenyl)propane, 2,2-bis-(4-hydroxypropoxyphenyl)ethane and mixtures thereof.

The diol is for example ethylene glycol or 1,4-cyclohexanedimethanol.

The polyester is for example poly(ethylene terephthalate) PET or polybutylene terephthalate or poly(ethylene 2,6-naphthalene-2,6-dicarboxylate) PEN.

It is also contemplated that the polyester can also be a blend of polyesters or copolyesters including components mentioned above.

Examples for polyolefins are:

1. Polymers of monoolefins and diolefins, for example polypropylene, polyisobutylene, polybut-1-ene, poly-4-methylpent-1-ene, polyisoprene or polybutadiene, as well as polymers of cycloolefins, for instance of cyclopentene or norbornene, polyethylene (which optionally can be crosslinked), for example high density polyethylene (HDPE), high density and high molecular weight polyethylene (HDPE-HMW), high density and ultrahigh molecular weight polyethylene (HDPE-UHMW), medium density polyethylene (MDPE), low density polyethylene (LDPE), linear low density polyethylene (LLDPE), (VLDPE) and (ULDPE).

Polyolefins, i.e. the polymers of monoolefins exemplified in the preceding paragraph, for example polyethylene and polypropylene, can be prepared by different, and especially by the following, methods:

i) radical polymerization (normally under high pressure and at elevated temperature).

ii) catalytic polymerization using a catalyst that normally contains one or more than one metal of groups IVb, Vb, VIb or VIII of the Periodic Table. These metals usually have one or more than one ligand, typically oxides, halides, alcoholates, esters, ethers, amines, alkyls, alkenyls and/or aryls that may be either p- or s-coordinated. These metal complexes may be in the free form or fixed on substrates, typically on activated magnesium chloride, titanium(III) chloride, alumina or silicon oxide. These catalysts may be soluble or insoluble in the polymerization medium. The catalysts can be used by themselves in the polymerization or further activators may be used, typically metal alkyls, metal hydrides, metal alkyl halides, metal alkyl oxides or metal alkyloxanes, said metals being elements of groups Ia, IIa and/or IIIa of the Periodic Table. The activators may be modified conveniently with further ester, ether, amine or silyl ether groups. These catalyst systems are usually termed Phillips, Standard Oil Indiana, Ziegler (-Natta), TNZ (DuPont), metallocene or single site catalysts (SSC).

2. Mixtures of the polymers mentioned under 1.), for example mixtures of polypropylene with polyisobutylene, polypropylene with polyethylene (for example PP/HDPE, PP/LDPE) and mixtures of different types of polyethylene (for example LDPE/HDPE).

3. Copolymers of monoolefins and diolefins with each other or with other vinyl monomers, for example ethylene/propylene copolymers, linear low density polyethylene (LLDPE) and mixtures thereof with low density polyethylene (LDPE), propylene/but-1-ene copolymers, propylene/isobutylene copolymers, ethylene/but-1-ene copolymers, ethylene/hexene copolymers, ethylene/methylpentene copolymers, ethylene/heptene copolymers, ethylene/octene copolymers, propylene/butadiene copolymers, isobutylene/isoprene copolymers, ethylene/alkyl acrylate copolymers, ethylene/alkyl methacrylate copolymers, ethylene/vinyl acetate copolymers and their copolymers with carbon monoxide or ethylene/acrylic acid copolymers and their salts (ionomers) as well as terpolymers of ethylene with propylene and a diene such as hexadiene, dicyclopentadiene or ethylidene-norbornene; and mixtures of such copolymers with one another and with polymers mentioned in 1) above, for example polypropylene/ethylene-propylene copolymers, LDPE/ethylene-vinyl acetate copolymers (EVA), LDPE/ethylene-acrylic acid copolymers (EAA), LLDPE/EVA, LLDPE/EAA and alternating or random polyalkylene/carbon monoxide copolymers and mixtures thereof with other polymers, for example polyamides.

Polyolefins of the present invention are for example polypropylene homo- and copolymers and polyethylene homo- and copolymers. For instance, polypropylene, high density polyethylene (HDPE), linear low density polyethylene (LLDPE) and polypropylene random and impact copolymers.

It is within the purview of the present invention to employ blends or alloys of olefin polymers.

The present polyolefin or polyester fibers, films or molded parts may also have incorporated therein or applied thereto appropriate additives such as ultraviolet light absorbers, hindered amine light stabilizers, antioxidants, processing aids and other additives.

For instance, the present compositions may further comprise one or more additives selected from the group consisting of hindered phenolic antioxidants, organic phosphorus stabilizers, hydroxylamine stabilizers, benzofuranone stabilizers, hindered amine light stabilizers and hydroxylphenyltriazine, hydroxyphenylbenzotriazole or hydroxybenzophenone ultraviolet light absorbers.

For more details on stabilizers and additives useful, see also list on pages 55-65 of WO 04/106311.

For example, the present present polyolefin or polyester material may optionally contain from about 0.01 to about 10 %, preferably from about 0.025 to about 5 %, and especially from about 0.1 to about 3 % by weight of one or more such further stabilizers or additives, based on the weight of the polymeric material.

The present Examples further illustrate the invention. Unless otherwise indicated, parts and percentages are by weight.

**Example 1**

The wettability additive employed is a mixture of ethoxylated alcohols $CH_3CH_2(CH_2CH_2)_aCH_2CH_2(OCH_2CH_2)_bOH$ where a is 13 and b is 2 and 3.

The silver antimicrobial employed is nano scaled elemental silver.

The following polypropylene (PP) formulations are prepared. The parts per million (ppm) and weight percents are by weight based on PP:

1) blank PP
2) PP with 3% ethoxylated alcohol
3) PP with 100 ppm silver
4) PP with 500 ppm silver
5) PP with 1000 ppm silver
6) PP with 100 ppm silver and 1.8% ethoxylated alcohol
7) PP with 500 ppm silver and 1.8% ethoxylated alcohol
8) PP with 1000 ppm silver and 1.8% ethoxylated alcohol

Test strains: staphylococcus aureus ATCC 9144 escherichia coli NCTC 8196
Material: sterile Petri dishes (55 mm)
humid chamber (> 96%)
sterile pipettes, sterile filter tips
stopwatch
sterile forceps
stomacher 80
stomacher bags
incubater 37°C
Neutralizer: phosphate buffer 0.07 molar, pH 7.4 containing 1% tween 80 and 0.3% lecithin (10mL/sample)
Dilution media: sterile deionized water, pH 7.4
Media: trypticase soy agar containing 3% tween 80, 0.3% lecithin and 0.1% L-histidine (Merckoplate) for determination of total bacterial numbers
Contact times: immediately after inoculation and after 24 hours at 37°C
Incubation of plates: 48 hours at 37°C

Continuous polypropylene miltifilament fibers are prepared using a fiber spinning line under the following conditions: Extruder temperature of 240°C, 40 filaments. Spinning pump speed is adjusted to produce fibers with a specific weight of 2.0 dpf. The fibers are knitted into socks.

Samples (2 discs with 40mm diameter) are cut and put in sterile Petri dishes. The test samples are then inoculated with 0.5 mL of the diluted bacterial suspension in NaCl 0.85% + 0.05% Caso broth (resulting in a final cell density of about $10^5$cfu/sample), placed in humid chamber and incubated at 37°C.

Immediately after inoculation (samples 1 and 2) and after 24 hours at 37°C, all inoculated samples are shaken for 1 minute in 10 mL phosphate buffer in order to resuspend the test microorganisms from the samples (stomacher 80).

After shaking, 1:10 dilutions until $10^{-3}$ (samples 1 and 2 until $10^{-4}$) are prepared in sterile deionized water. From the undiluted sample and from the dilutions, samples of 100$\mu$L are plated out on agar plates by means of a spiral plater. After incubation of the inoculated agar plates, the colonies are counted and reported as cfu/sample.

Samples 1 and 2 are taken for the calculation of log reductions after 24 hours contact time.

The PP socks are washed under the following conditions:

30 g detergent ECE 98 / kg textile
Liquor ratio 6:1 (this means 6 liter of drinking tap water / kg textile)
20 minutes at 40°C
Instrument: Linitest from ATLAS Testing Materials
30 seconds rinsing in running drinking tap water
Squeeze spinning for 30 seconds and
Drying on a line (in a oven) at 60°C (after each wash cycle)

The results are as follows.

Staphylococcus aureus ATCC 9144 log reduction as a function of washing cycle

| sample | before washing | 1 cycle | 2 cycles | 5 cycles | 10 cycles | 15 cycles |
|---|---|---|---|---|---|---|
| 1 | st growth | st growth | st growth | st growth | st growth | st growth |
| 2 | st growth | st growth | st growth | st growth | st growth | st growth |
| 3 | < 1 | <1 | | | | |
| 4 | >5 | <1 | | | | |
| 5 | >5 | <1 | | | | |
| 6 | <1 | 2.1 | <1 | <1 | | |
| 7 | >5 | >5 | >5 | 4.7 | <1 | |
| 8 | >5 | >5 | >5 | >5 | 3.8 | <1 |
| st growth = strong growth | | | | | | |

Escherichia coli NCTC 8196 log reduction as a function of washing cycle

| sample | before washing | 1 cycle | 2 cycles | 5 cycles | 10 cycles | 15 cycles |
|---|---|---|---|---|---|---|
| 1 | st growth | st growth | st growth | st growth | st growth | st growth |
| 2 | st growth | st growth | st growth | st growth | st growth | st growth |
| 3 | < 1 | <1 | | | | |
| 4 | >5 | <1 | | | | |
| 5 | >5 | <1 | | | | |
| 6 | st growth | <1 | <1 | <1 | | |
| 7 | >5 | >5 | >5 | <1 | <1 | |
| 8 | >5 | >5 | >5 | <1 | <1 | |
| st growth = strong growth | | | | | | |

The bacterial activity is excellent (above 5 log reduction) with all samples containing at least 500 ppm elemental silver. However, the effect is not durable to washing cycles without the presence of an ethoxylated alcohol additive. The presence of an ethoxylated alcohol additive clearly provides a more durable antimicrobial activity.

## Example 2

Example 1 is repeated, using polyethylene terephthalate nonwoven textile and as wettability additive a mixture of primary and secondary sodium alkyl sulfonic acid salts $RSO_3Na$ where R = C14 (64%), C15 (31%) and C16 (5%).

Excellent durable antimicrobial activity of the present formulations is achieved.

## Example 3

The wettability additive employed is a 1 to 1 weight mixture of ethoxylated alcohols $CH_3CH_2(CH_2CH_2)_aCH_2CH_2(OCH_2CH_2)_bOH$ where a is 13 and b is 2 and 3 to a stearyl 2 mole ethoxylate.

The silver antimicrobial employed is micron scaled elemental silver or zeolite supported ionic silver.

The following polypropylene (PP) formulations are prepared. The weight percents are by weight based on PP:

1) Blank PP
2) PP with 1.8% ethoxylated alcohol
3) PP with 1% zeolite supported silver
4) PP with 1% zeolite supported silver and 1.8% ethoxylated alcohol

The test samples are prepared by incorporating the antimicrobial silver into polypropylene substrate using a Brabender ball mixer, followed by compression molding at 372°F/6 minutes.

The test method is JISZ 2801.

| Test Strains: | Escherichia coli ATCC 10536 | |
|---|---|---|
| Material: | sterile petri dishes (90 mm and 55 mm) | |
| | sterile disposable pipettes 1 ml & 100 $\mu$l | |
| | sterile glass pipettes | |
| | sterile test tubes | |
| | PE films (4 x 4 cm) or substitute | |
| | humid/vacuum chamber | |
| | Heidolph shaker | |
| | Stomacher bags | |
| | sterile forceps | |
| | Vortex mixer | |
| | IUL "Eddy Jet" spiralometer & counter | |
| | Bunsen burner | |
| | different beakers | |
| | incubator 37°C | |

| Liquid media | | |
|---|---|---|
| **Culture medium** for preparation of bacterial inoculum: | | |
| Nutrient broth: | beef extract | 3.0 g |
| | peptone | 10 g |
| | sodium chloride | 5.0 g |
| | distilled water | 1000 mL |
| **Inactivation medium:** | | |
| SCDLP broth: | casein peptone | 17 g |
| | soybean peptone | 3.0 g |
| | sodium chloride | 5.0 g |
| | disodium hydrogen phosphate | 2.5 g |
| | glucose | 2.5g |
| | lecithin | 1.0 g |
| | distilled water | 1000 mL |

(continued)

After mixing, add 7 g Tween 80 and dissolve it.

**Dilution medium:**
Phosphate buffered physiological saline 34 g Potassium dihydrogen phosphate is dissolved in 500 ml purified water and adjusted to pH 6.8-7.2 (25°C) with sodium hydroxide solution. Add 500 mL purified water to get 1000 mL. Dilute the phosphate buffer solution with physiological saline (0.85% sodium chloride) 800-fold (phosphate buffer:sodium chloride solution-1:800). If the buffer is not used immediately after preparation, preserve it at 5-10°C.

Solid media

**Plate count agar** for determination of bacterial cell count and preparation of inoculum:

| | |
|---|---|
| yeast extract | 2.5 g |
| tryptone | 5.0 g |
| glucose | 1.0 g |
| agar | 15 g |
| purified water | 1000 mL |

**Casein-soy meal peptone-agar** for determination of bacterial cell count of the inoculum:
Tryptic Soy Agar from Merck #18360: 2% peptone (from casein and soymeal), 0,5% NaCl, 1,5% Agar-agar containing 3% Tween® 80, 0,3% Lecithin and 0,1% L-histidine (petri dishes with 18 ml agar)

Test procedure:

The test piece (5 x 5 cm) is placed with the test surface up in the middle of a sterile petri dish. Samples are inoculated with 0.4 ml bacterial solution in 1/500 nutrient broth diluted in deionized water (resulting in a final concentration of - $10^5$ cfu) and covered with a film. Two sample specimens per antimicrobial surface are inoculated and incubated in a humid chamber at 37°C for 24h.

After incubation, 10 mL inactivation buffer is added to the test samples and shaken for 1-2 minutes. For the following dilution, 1 mL of the liquid content of each Petri dish is taken out and diluted in phosphate buffered physiological saline in steps 1:10 down to $10^{-5}$. 1 mL of the undiluted suspensions and of the 1:10 and 1:1000 dilutions are transferred into a petri dish and 15-20ml of plate count agar is added. These plates are then incubated for 48 hours at 37°C. After incubation, the visible colonies are counted and the results are given as colony forming units per sample [cfu/sample] according to the following formula

$$cfu/plate \times dilution\ factor \times 10$$

The detection limit of this method is **<10 cells/sample** if no bacteria colony appears on the plate of the undiluted suspension.

The initial value at 0 h is determined with the untreated samples without any antimicrobial properties. Here, the inoculum is distributed on the sample, covered with a film and immediately 10 mL inactivation buffer is added. 1 mL is transferred to a sterile petri dish and 15-20 mL plate count agar is added.

The results are as follows.

Escherichia coli ATCC 10536 log reduction

| sample | after 24 hours |
|---|---|
| 1 | st growth |
| 2 | st growth |
| 3 | st growth |

(continued)

| sample | after 24 hours |
|---|---|
| 4 | >4 |

st growth = strong growth

The bacterial activity is excellent (above 4 log reduction) with all samples containing 1% zeolite supported silver and 1.8% ethoxylated alcohol. The presence of an ethoxylated alcohol additive clearly provides a strong synergistic antimicrobial activity.

## Example 4

Example 3 is repeated using polyethylene, and as wettability additive a mixture of primary and secondary sodium alkyl sulfonic acid salts $RSO_3Na$ where R = C14 (64%), C15 (31%) and C16 (5%).
Samples are as follows.

1) Blank PP
2) PP with 2% sodium alkyl sulfonic acid salt
3) PP with 2% elemental silver
4) PP with 1% zeolite supported silver
5) PP with 2% elemental silver and 2% sodium alkyl sulfonic acid salt
6) PP with 1% zeolite supported silver and 2% sodium alkyl sulfonic acid salt

Escherichia coli ATCC 10536 log reduction

| sample | after 24 hours |
|---|---|
| 1 | st growth |
| 2 | st growth |
| 3 | st growth |
| 4 | st growth |
| 5 | >4 |
| 6 | >4 |

st growth = strong growth

The bacterial activity is excellent (above 4 log reduction) with all samples containing either form of silver plus 2% sodium alkyl sulfonic acid salt. The presence of a sodium alkyl sulfonic acid salt additive clearly provides a strong synergistic antimicrobial activity.

## Example 5

Example 4 is repeated using polyethylene and as wettability additive a mixture of primary and secondary sodium alkyl sulfonic acid salts $RSO_3Na$ where R = C14 (64%), C15 (31%) and C16 (5%). The efficacy test employed is as in Nature Medicine, Vol. 6, No. 8, September, 2000. p. 1053.
Samples are as follows.

1) Blank PP
2) PP with 2% sodium alkyl sulfonic acid salt
3) PP with 2% elemental silver
4) PP with 1% zeolite supported silver
5) PP with 2% elemental silver and 2% sodium alkyl sulfonic acid salt
6) PP with 1% zeolite supported silver and 2% sodium alkyl sulfonic acid salt

Staphlococcus epidermidis DMS 18857

| sample | after 24 hours |
|--------|----------------|
| 1 | - |
| 2 | - |
| 3 | - |
| 4 | - |
| 5 | + |
| 6 | - |
| "+" = Onset OD hour > 6 h (the antimicrobial threshold) | |

The bacterial activity is strong (12.1 h) with the samples containing 2% elemental silver plus 2% sodium alkyl sulfonic acid salt. The presence of a sodium alkyl sulfonic acid salt additive clearly provides a synergistic antimicrobial activity.

Escherichia coli DMS 682/ATCC 10536

| sample | after 24 hours |
|--------|----------------|
| 1 | - |
| 2 | - |
| 3 | ++ |
| 4 | - |
| 5 | +++ |
| 6 | + |
| "+" = Onset OD hour > 6h (the antimicrobial threshold) | |

The bacterial activity is strong (12.1 h) with the samples containing either silver plus 2% sodium alkyl sulfonic acid salt. The presence of an sodium alkyl sulfonic acid salt additive clearly provides a synergistic antimicrobial activity.

**Claims**

**1.**  A polyolefin or polyester composition with durable antimicrobial activity comprising
a polyolefin or polyester substrate and
incorporated therein
a silver antimicrobial and a wettability additive selected from the group consisting of ethoxylated alcohols and alkyl metal sulfonates.

**2.**  A composition according to claim **1** comprising a polyolefin substrate, especially polypropylene or polyethylene.

**3.**  A composition according to claim **1** comprising a polyester substrate, especially polyethylene terephthalate, polybutylene terephthalate, polyethylene 2,6-naphthalene-2,6-dicarboxylate.

**4.**  A composition according to claim **1** which is a woven or nonwoven fabric, a film or a molded part.

**5.**  A composition according to claim **1** where the silver antimicrobial is selected from the group consisting of silver supported on a zeolite, silver supported on a glass, elemental silver, micro or nano scaled elemental silver, elemental silver dispersed in silicone oil, silver chloride, silver nitrate, silver sulfate, silver phosphate, silver zirconate and silver apatite.

6. A composition according to claim **1** where the silver antimicrobial is silver supported on a zeolite, silver supported on a glass, micro scaled elemental silver or nano scaled elemental silver.

7. A composition according to claim **1** where the silver antimicrobial is present from 0.001 to 15 weight percent silver, especially from 0.005 to 1 weight percent silver, based on the weight of the polyolefin or polyester.

8. A composition according to claim **1** where the wettability additive is selected from the group consisting of ethoxylated alcohols $CH_3CH_2(CH_2CH_2)_aCH_2CH_2(OCH_2CH_2)_bOH$ where a is 6 to 25 and b is 1 to 100.

9. A composition according to claim **8** where the wettability additive is selected from the group consisting of ethoxylated alcohols $CH_3CH_2(CH_2CH_2)_aCH_2CH_2(OCH_2CH_2)_bOH$ where a is 6 to 25 and b is 1 to 10.

10. A composition according to claim **1** where the wettability additive is selected from the group consisting of alkyl metal sulfonates of formula $RSO_3M$, where M is Na, K or Li and R is straight or branched chain alkyl of 6 to 32 carbon atoms or is straight or branched chain alkenyl of 6 to 32 carbon atoms.

11. A composition according to claim **10** where the wettability additive is selected from the group consisting of alkyl metal sulfonates of formula $RSO_3M$, where M is Na, K or Li and R is straight or branched chain alkyl of 12 to 15 carbon atoms or is straight or branched chain alkenyl of 12 to 18 carbon atoms.

12. A composition according to claim **1** where the wettability additive is present from 0.001% to 15% by weight, especially from 1% to 7% by weight, based on the weight of the polyolefin or polyester.

13. A composition according to claim **1** further comprising an additive selected from the group consisting of hindered phenolic antioxidants, organic phosphorus stabilizers, hydroxylamine stabilizers, benzofuranone stabilizers, hindered amine light stabilizers and hydroxylphenyltriazine, hydroxyphenylbenzotriazole or hydroxybenzophenone ultraviolet light absorbers.

14. A process for providing durable antimicrobial activity towards polyolefin or polyester compositions, which process comprises
incorporating into a polyolefin or polyester substrate
a silver antimicrobial and a wettability additive selected from the group consisting of ethoxylated alcohols and alkyl metal sulfonates.

15. Use of a silver antimicrobial and a wettability additive selected from the group consisting of ethoxylated alcohols and alkyl metal sulfonates for imparting antimicrobial activity towards a polyolefin or polyester composition.

**Patentansprüche**

1. Polyolefin- oder Polyesterzusammensetzung mit dauerhafter antimikrobieller Wirkung, umfassend ein Polyolefin- oder Polyestersubstrat und
darin eingearbeitet
ein Silber-Antimikrobiotikum und ein Benetzbarkeitsadditiv aus der Gruppe bestehend aus ethoxylierten Alkoholen und Metallalkylsulfonaten.

2. Zusammensetzung nach Anspruch 1, umfassend ein Polyolefinsubstrat, insbesondere Polypropylen oder Polyethylen.

3. Zusammensetzung nach Anspruch 1, umfassend ein Polyestersubstrat, insbesondere Polyethylenterephthalat, Polybutylenterephthalat oder Poly-ethylen-2,6-naphthalin-2,6-dicarboxylat.

4. Zusammensetzung nach Anspruch 1, wobei es sich um ein Gewebe, einen Vliesstoff, eine Folie oder ein Formteil handelt.

5. Zusammensetzung nach Anspruch 1, wobei das Silber-Antimikrobiotikum aus der Gruppe bestehend aus auf einem Zeolith geträgertem Silber, auf einem Glas geträgertem Silber, elementarem Silber, mikro- oder nanoskaligem elementarem Silber, in Silikonöl dispergiertem elementarem Silber, Silberchlorid, Silbernitrat, Silbersulfat, Silberphosphat, Silberzirconat und Silberapatit ausgewählt ist.

6. Zusammensetzung nach Anspruch 1, wobei es sich bei dem Silber-Antimikrobiotikum um auf einem Zeolith geträgertes Silber, auf einem Glas geträgertes Silber, mikroskaliges elementares Silber oder nanoskaliges elementares Silber handelt.

7. Zusammensetzung nach Anspruch 1, wobei das Silber-Antimikrobiotikum in einer Menge von 0,001 bis 15 Gewichtsprozent Silber, insbesondere von 0,005 bis 1 Gewichtsprozent Silber, bezogen auf das Gewicht des Polyolefins bzw. Polyesters, vorliegt.

8. Zusammensetzung nach Anspruch 1, wobei das Benetzbarkeitsadditiv aus der Gruppe bestehend aus ethoxylierten Alkoholen $CH_3CH_2(CH_2CH_2)_aCH_2CH_2(OCH_2CH_2)_bOH$, wobei a für 6 bis 25 steht und b für 1 bis 100 steht, ausgewählt ist.

9. Zusammensetzung nach Anspruch 8, wobei das Benetzbarkeitsadditiv aus der Gruppe bestehend aus ethoxylierten Alkoholen $CH_3CH_2(CH_2CH_2)_aCH_2CH_2(OCH_2CH_2)_bOH$, wobei a für 6 bis 25 steht und b für 1 bis 10 steht, ausgewählt ist.

10. Zusammensetzung nach Anspruch 1, wobei das Benetzbarkeitsadditiv aus der Gruppe bestehend aus Metallalkylsulfonaten der Formel $RSO_3M$, wobei M für Na, K oder Li steht und R für gerad- oder verzweigtkettiges Alkyl mit 6 bis 32 Kohlenstoffatomen oder gerad- oder verzweigtkettiges Alkenyl mit 6 bis 32 Kohlenstoffatomen steht, ausgewählt ist.

11. Zusammensetzung nach Anspruch 10, wobei das Benetzbarkeitsadditiv aus der Gruppe bestehend aus Metallalkylsulfonaten der Formel $RSO_3M$, wobei M für Na, K oder Li steht und R für gerad- oder verzweigtkettiges Alkyl mit 12 bis 15 Kohlenstoffatomen oder gerad- oder verzweigtkettiges Alkenyl mit 12 bis 18 Kohlenstoffatomen steht, ausgewählt ist.

12. Zusammensetzung nach Anspruch 1, wobei das Benetzbarkeitsadditiv in einer Menge von 0,001 bis 15 Gew.-%, insbesondere von 1 bis 7 Gew.-%, bezogen auf das Gewicht des Polyolefins bzw. Polyesters, vorliegt.

13. Zusammensetzung nach Anspruch 1, ferner umfassend ein Additiv aus der Gruppe bestehend aus gehinderten phenolischen Antioxidantien, organischen Phosphorstabilisatoren, Hydroxylamin-Stabilisatoren, Benzofuranon-Stabilisatoren, Lichtschutzmitteln vom Typ gehindertes Amin und Hydroxyphenyltriazin-, Hydroxyphenylbenzotriazol- oder Hydroxybenzophenon-Ultraviolettlichtabsorbern.

14. Verfahren zur Ausrüstung von Polyolefin- oder Polyesterzusammensetzung mit dauerhafter antimikrobieller Wirkung, bei dem man
in ein Polyolefin- oder Polyestersubstrat ein Silber-Antimikrobiotikum und ein Benetzbarkeitsadditiv aus der Gruppe bestehend aus ethoxylierten Alkoholen und Metallalkylsulfonaten einarbeitet.

15. Verwendung eines Silber-Antimikrobiotikums und eines Benetzbarkeitsadditivs aus der Gruppe bestehend aus ethoxylierten Alkoholen und Metallalkylsulfonaten zur Ausrüstung einer Polyolefin- oder Polyesterzusammensetzung mit dauerhafter antimikrobieller Wirkung.

**Revendications**

1. Composition de polyoléfine ou de polyester avec une activité antimicrobienne durable comprenant
un substrat de polyoléfine ou de polyester et, incorporés à l'intérieur,
un antimicrobien à base d'argent et un additif de mouillabilité choisi dans le groupe constitué par les alcools éthoxylés et les alkylsulfonates métalliques.

2. Composition selon la revendication 1 comprenant un substrat de polyoléfine, en particulier du polypropylène ou du polyéthylène.

**3.** Composition selon la revendication 1 comprenant un substrat de polyester, en particulier du téréphtalate de polyéthylène, du téréphtalate de polybutylène ou du 2,6-naphtalène-2,6-dicarboxylate de polyéthylène.

**4.** Composition selon la revendication 1 qui est un tissu ou un non-tissé, un film ou une pièce moulée.

**5.** Composition selon la revendication 1 dans laquelle l'antimicrobien à base d'argent est choisi dans le groupe constitué par l'argent sur support de zéolithe, l'argent sur support de verre, l'argent élémentaire, l'argent élémentaire à l'échelle micro- ou nanométrique, l'argent élémentaire dispersé dans de l'huile de silicone, le chlorure d'argent, le nitrate d'argent, le sulfate d'argent, le phosphate d'argent, le zirconate d'argent et l'apatite d'argent.

**6.** Composition selon la revendication 1 dans laquelle l'antimicrobien à base d'argent est de l'argent sur support de zéolithe, de l'argent sur support de verre, de l'argent élémentaire à l'échelle micrométrique ou de l'argent élémentaire à l'échelle nanométrique.

**7.** Composition selon la revendication 1 dans laquelle l'antimicrobien à base d'argent est présent à 0,001 à 15 pour cent en poids d'argent, en particulier 0,005 à 1 pour cent en poids d'argent, rapporté au poids de la polyoléfine ou du polyester.

**8.** Composition selon la revendication 1 dans laquelle l'additif de mouillabilité est choisi dans le groupe constitué par les alcools éthoxylés $CH_3CH_2(CH_2CH_2)_aCH_2CH_2(OCH_2CH_2)_bOH$ où a vaut 6 à 25 et b vaut 1 à 100.

**9.** Composition selon la revendication 8 dans laquelle l'additif de mouillabilité est choisi dans le groupe constitué par les alcools éthoxylés $CH_3CH_2(CH_2CH_2)_aCH_2CH_2(OCH_2CH_2)_bOH$ où a vaut 6 à 25 et b vaut 1 à 10.

**10.** Composition selon la revendication 1 dans laquelle l'additif de mouillabilité est choisi dans le groupe constitué par les alkylsulfonates métalliques de formule $RSO_3M$, où M représente Na, K ou Li et R représente un alkyle à chaîne linéaire ou ramifiée de 6 à 32 atomes de carbone ou représente un alcényle à chaîne linéaire ou ramifiée de 6 à 32 atomes de carbone.

**11.** Composition selon la revendication 10 dans laquelle l'additif de mouillabilité est choisi dans le groupe constitué par les alkylsulfonates métalliques de formule $RSO_3M$, où M représente Na, K ou Li et R représente un alkyle à chaîne linéaire ou ramifiée de 12 à 15 atomes de carbone ou représente un alcényle à chaîne linéaire ou ramifiée de 12 à 18 atomes de carbone.

**12.** Composition selon la revendication 1 dans laquelle l'additif de mouillabilité est présent à 0,001 % à 15 % en poids, en particulier 1 % à 7 % en poids, rapporté au poids de la polyoléfine ou du polyester.

**13.** Composition selon la revendication 1 comprenant en outre un additif choisi dans le groupe constitué par les antioxydants phénoliques stériquement encombrés, les stabilisants phosphorés organiques, les stabilisants à base d'hydroxylamine, les stabilisants à base de benzofuranone, les photostabilisants à base d'amine stériquement encombrée et les absorbeurs de rayonnement ultraviolet à base d'hydroxyphényltriazine, d'hydroxy-phénylbenzotriazole ou d'hydroxybenzophénone.

**14.** Procédé destiné à conférer une activité antimicrobienne durable à des compositions de polyoléfine ou de polyester, lequel procédé comprend
l'incorporation dans un substrat de polyoléfine ou de polyester
d'un antimicrobien à base d'argent et d'un additif de mouillabilité choisi dans le groupe constitué par les alcools éthoxylés et les alkylsulfonates métalliques.

**15.** Utilisation d'un antimicrobien à base d'argent et d'un additif de mouillabilité choisi dans le groupe constitué par les alcools éthoxylés et les alkylsulfonates métalliques pour conférer une activité antimicrobienne à une composition de polyoléfine ou de polyester.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4775585 A
- US 4911898 A
- US 4911899 A
- US 6071542 A
- US 6585989 B
- US 20050233888 A
- US 6984392 B
- WO 2006051048 A
- US 6784235 B
- US 20020169429 A
- US 20060020066 A

- US 6585989 A
- US 5049139 A
- US 6143318 A
- US 6822034 B
- US 4357390 A
- US 4666764 A
- US 4351738 A
- US 5961504 A
- US 6031147 A
- US 6110849 A
- WO 04106311 A

**Non-patent literature cited in the description**

- *Nature Medicine,* September 2000, vol. 6 (8), 1053